Europäisches Patentamt

European Patent Office

Office européen des brevets

(19)

(11) EP 0 487 356 B1

(12) EUROPEAN PATENT SPECIFICATION

(45) Date of publication and mention
of the grant of the patent:
**15.01.1997 Bulletin 1997/03**

(51) Int Cl.6: **G01N 15/14**

(21) Application number: 91310788.4

(22) Date of filing: **22.11.1991**

(54) **Method of and apparatus for analyzing granule grinding degrees**

Verfahren und Vorrichtung zur Analyse des Schleifgrades eines Granulats

Procédé et appareil pour l'analyse du dégré de meulage d'un granulé

(84) Designated Contracting States:
**CH DE ES FR GB IT LI NL**

(30) Priority: **22.11.1990 JP 318995/90**

(43) Date of publication of application:
**27.05.1992 Bulletin 1992/22**

(73) Proprietor: **SATAKE CORPORATION**
**Chiyoda-ku, Tokyo 101 (JP)**

(72) Inventors:
 • **Satake, Toshihiko**
  **Higashihiroshima-shi, Hiroshima-ken (JP)**
 • **Satake, Satoru**
  **Higashihiroshima-shi, Hiroshima-ken (JP)**
 • **Hosaka, Yukio**
  **Kamo-gun, Hiroshima-ken (JP)**
 • **Ishii, Takeshi**
  **Higashihiroshima-shi, Hiroshima-ken (JP)**

(74) Representative: **Votier, Sidney David et al**
  **CARPMAELS & RANSFORD**
  **43, Bloomsbury Square**
  **London WC1A 2RA (GB)**

(56) References cited:
 **EP-A- 0 138 591**      **EP-A- 0 289 677**
 **EP-A- 0 335 001**      **WO-A-89/01619**
 **WO-A-91/09296**      **WO-A-91/14169**
 **FR-A- 1 256 900**      **US-A- 4 765 737**

 • **PATENT ABSTRACTS OF JAPAN vol. 9, no. 236
  (P-390)(1959) 21 September 1985 & JP-A-60 089
  731**

## Description

BACKGROUND OF THE INVENTION

(1) Field of the Invention

The present invention relates to a method of and apparatus for analyzing granule grinding degrees, and more particularly to an apparatus, having a simple construction, for analyzing diameters and distribution of granules and to a roll space adjusting apparatus for a grinding system utilizing such analyzing apparatus.

(2) Description of Related Art

Granule grinding degree analyzing methods known as prior art include: a microscopic method wherein the size of a granule image observed by a microscope is directly measured or is measured after a picture thereof has been taken; a precipitation method wherein diameters of granules are made known from precipitation speeds of granules dispersed in a medium; an electron zone method wherein a vessel containing electrolyte is divided into two sections by a wall having a small hole, an electrode is placed in each of the two sections, and a predetermined voltage is applied between the two electrodes so as to cause the current to flow through the small hole and wherein use is made of such phenomenon that, when a granule of a certain volume passes through the small hole, the measurement of the hole decreases and the value of resistance increases proportionally to such volume of the granule; a dynamic light dispersion method wherein a laser beam is subjected to a small limited portion of suspension for measuring the changes which take place in the intensity of light dispersed among a large number of particles within the limited portion and wherein, by making use of the phenomenon that larger particles are slower than smaller particles in their movement with time, these changes are converted into signals and the self-correlation function of the changes is calculated by a known diffusion equation; a light diffraction method wherein a laser beam is applied to a group of granules dispersed in a medium and the rays of light diffracted are condensed by a lens and wherein the diameter of the diffracted image ring and the intensity of the diffracted light are measured; and a hydrodynamic chromatography method wherein a mobile phase of liquid is allowed to flow through a stationary phase formed by fillers of relatively large granules, a suspension is introduced into the mobile phase from an inlet portion of the stationary phase and wherein use is made of a phenomenon of progressive changes, that is, the granules of the larger size appear first from the outlet portion of the stationary phase and then the granules of the smallest size appear last from the outlet portion.

The conventional methods explained above can be used for experimentation or research purposes but they cannot be used for automated granule analyzing method or means in the milling or flour milling industry in view of the problems associated with the granule analyzing time, sampling, automating means and costs.

The flour-milling such as milling of wheat involves a complex combination of process steps, such as, a crushing and a grinding step which are called a breaking and a reduction step, and a sorting and a grading step which use purifiers and sieves. The degree of granules is important and is a deciding factor for the quality of the flour produced. Thus, the adjustment of the grinding state in the crushing and grinding processes, that is, the adjustment of grinding degree which can be changed in any way desired by the adjustment of the space or gap between the rolls of the grinder plays an important role. Such roll space adjustment is effected based on a reference value which is obtained through a process wherein the granules ground by grinding rolls are allowed to pass through a plurality of sieves having different meshes and the residual granule percentage is calculated for the granule diameters from the granules which remain on the related sieve. Thus, the roll space adjustment is made by having the targeted value brought equal to the residual granule percentage.

The roll adjustment during the crushing and grinding operation by the grinding apparatus requires the above mentioned process of analyzing granules by sieves each time such adjustment is conducted and, since such process is complex and time consuming, the operator often tends to rely rather on a feel or appearance of granules. There are some proposals towards automating the granule analyzing process wherein each of the granule supplying end and the granule discharging end of a sieve is provided with a flow meter so as to obtain the granule residual ratio from the difference in the amount of granules at the granule supplying end and the granule discharging end or wherein the distribution of ground granules is obtained through a laser diffraction method. However, since such proposals require a number of measuring apparatuses or expensive apparatuses for such purposes, today it is still considered difficult to employ the above for practical applications.

EP-A-0 289 677 discloses an apparatus and method for particle analysis in which a photodetector detects light backscattered from a focal spot by particles in a fluent medium.

SUMMARY OF THE INVENTION

The present invention is defined in the claims and aims at providing an automated granule analyzing apparatus by automating systems usable for the grinding of any granules irrespective of kinds of granules to be ground and also at providing a means for adjusting a space or gap between the rolls of the grinding apparatus. The invention relates to such apparatus and method which are simple and economical.

The analysis of granules here mainly means the measurement of granule distribution, that is, mainly the granule distribution based on the diameter of a granule as a unit. However, according to the present invention, the unit is not limited to the granule diameter as it includes such units as the time of the light being intercepted by a granule, the length of the granule obtained from such time, and the granule diameter obtained from such length.

In the roll space adjusting method and apparatus according to the invention, when the subject granule passes through between the coherent light emitting portion and the light receiving portion disposed facing the coherent light emitting portion and provided with an element directly receiving the coherent light, the subject granule intercepts the coherent light and the light receiving element receives no light during the period in which the coherent light is intercepted. The time or time period of interception measured by the counter means connected to the light receiving element is proportional to the size of the subject granule and is inversely proportional to the moving speed of the subject granule.

Here, if the moving speed of the subject granules is known in advance, it is possible to calculate from the interception time and the moving speed the length of the subject granule that has intercepted the coherent light. This length may be taken as the diameter of the subject granule if such granule is assumed to be spherical.

As explained above, the interception time counted at the counter means connected to the light receiving element is correlated to the diameter of the subject granule. If a known granule distribution is analyzed according to the method of the present invention and the correlation coefficient between the interception time with the frequency of such interception and the known granule distribution is obtained, it is possible to use such coefficient as a predetermined coefficient and calculate the granule distribution (not known) of the given granule once the interception time with the frequency of such interception is measured.

The apparatus to be used for the above only needs to measure the time and its frequencies of the coherent light being intercepted by the subject granule and may have a sensor portion constituted simply by a coherent light emitting means, e.g., a laser beam emitting means, and a light receiving means, e.g., a photo-diode or a photo-transistor, disposed facing the coherent light emitting means for directly receiving the coherent light.

The arithmetic or operation means calculates the distribution of the subject granules based on the outputs from the counter means and the predetermined coefficients stored in the memory means and also, by storing in the memory means the targeted granule diameter in cumulative percentages as standards or references for roll space adjustment of apparatuses for flour-milling (e. g., breaking) of such as wheat grains, calculates the cumulative percentage for the targeted granule diameter from the targeted reference granule diameter and the above mentioned granule distribution. The output means outputs the granule distribution of the subject granules and the cumulative percentage.

The control means outputs to the roll space adjusting means a difference in percentage between the cumulative percentages against the targeted granule diameter outputted from the output means and the residual granule ratios used as standards.

The roll space adjusting means operates to adjust the roll spacing based on the output values from the control means.

In the foregoing, it has been explained that the granule distribution is calculated at the operation means based on the predetermined coefficients and the outputs from the counter means. However, it is to be noted that the predetermined coefficient is not limited to that for the calculation of the granule distribution since it is possible to set a predetermined coefficient separately for calculating further a cumulative weight percentage for a targeted granule diameter from the granule distribution obtained, or to set a coefficient separately for converting the outputs from the counter means directly into weights at the operation means.

The predetermined coefficients to be used for obtaining the granule distribution may also be obtained from the correlation between the equivalent circle diameter (area) with its frequencies to be obtained by an equivalent circle diameter method utilizing such as a CCD camera and the output from the counter means with its frequencies.

## BRIEF DESCRIPTION OF THE DRAWINGS

The above and other objects, features and advantages of the present invention will be apparent from the following description of preferred embodiments of the invention explained with reference to the accompanying drawings, in which:

Fig. 1 is a block diagram showing a granule analyzing apparatus according to the present invention;
Fig. 2 is a block diagram showing a light receiving means and a counter means in the apparatus shown in Fig. 1, according to the present invention;
Fig. 3 is a timing chart of signals at various points in the light receiving means and the counter means in Fig. 2;
Fig. 4 is a block diagram showing the granule analyzing apparatus utilized in a roll space adjusting means of a grinding apparatus; ,
Fig. 5 is a graph showing cumulative frequency percentage of granules with respect to targeted granule diameters: and
Fig. 6 is a circuit diagram of a light receiving means using a photo-diode as another example.

## DESCRIPTION OF PREFERRED EMBODIMENTS

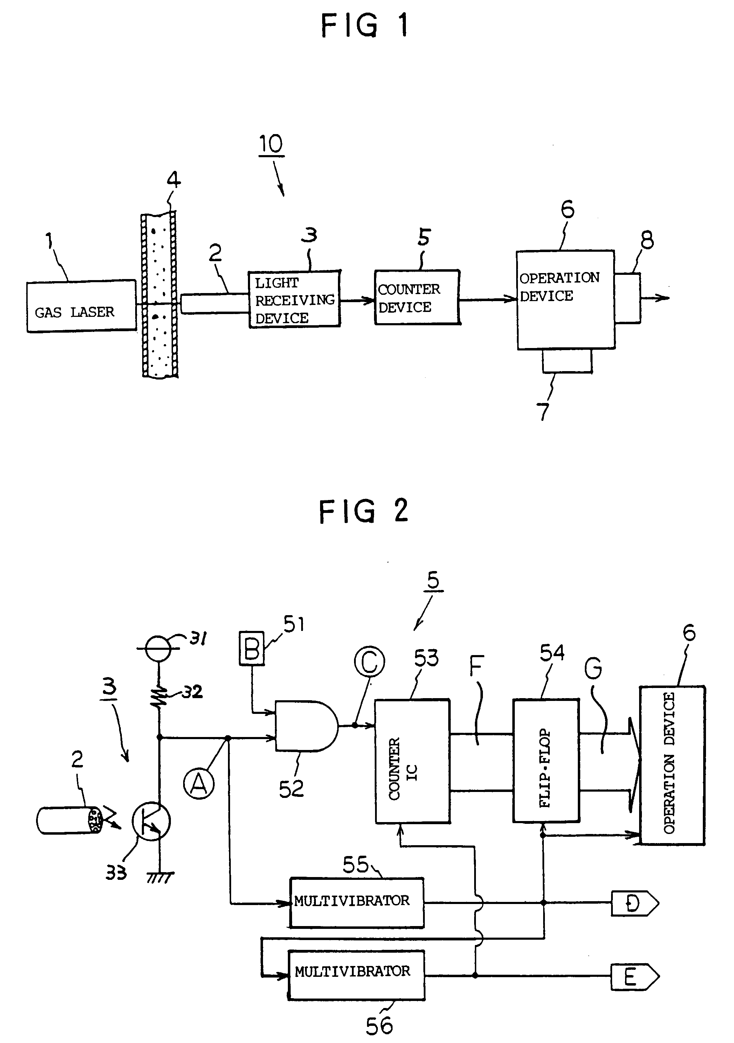

Now, an explanation is made for an arrangement of the first embodiment according to the present invention with reference to Fig. 1.

Fig. 1 illustrates in a block diagram an apparatus for and a method of analyzing granules by showing a granule analyzing apparatus 10.

The numeral 1 represents a coherent light emitting means which is composed mainly of a helium-neon laser means (hereinafter referred to as "gas laser 1"). There is provided an optical fiber 2 which faces the gas laser 1 for directly receiving a beam of the gas laser 1. The optical fiber 2 is connected to a light receiving means 3 having a photoelectric light detecting element, for example, a photo-transistor (hereinafter referred to as "photo-transistor means 3"). The gas laser 1 and the optical fiber 2 may be provided internally of the flour-milling apparatus but they may alternatively be arranged in such a manner that a bypass be provided in the passage of the granules coming out of such apparatus, a measurement channel 4 through which the beam of the laser 1 passes be provided at a portion of the bypass, and the gas laser 1 and the optical fiber 2 face each other with the measurement channel 4 interposed therebetween.

An electric output from the photo-transistor means 3 is directly inputted to a counter means 5. The counter means 5 is internally equipped with an oscillating means and, based on its oscillation frequencies and such changes in electric outputs (rectangular waves) of the photo-transistor means 3 as those produced due to the interception of the laser beam by the passing of a granule, the counter means 5 calculates and outputs a data on the time period during which the laser beam is intercepted by the passing granule.

With reference to Fig. 2, a further explanation is made on the photo-transistor means 3 and the counter means 5.

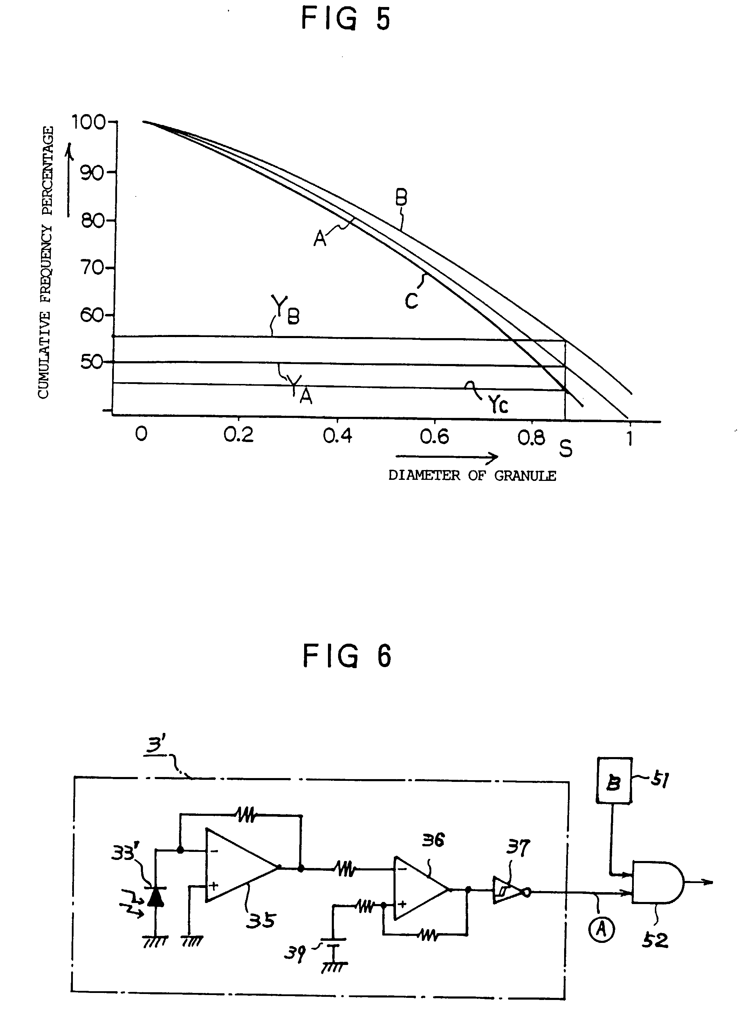

The photo-transistor means 3 includes a photo-transistor 33 which is connected to the optical fiber 2 and which has an emitter grounded and a collector connected to a pull-up power source 31 through a protective resistor 32. The photo-transistor 33 operates to be a conductive or a non-conductive state in accordance with the reception of light incident on the base region thereof. The photo-transistor 33 can be replaced by a photo-diode 33′ as another example of the photoelectric detection element. Fig. 6 shows a block diagram of the light receiving means 3′ in which the photo-diode 33′ is adopted instead of the photo-transistor 33 shown in Fig. 2. In this example, the light receiving means 3′ includes a current-voltage converter 35 having one input connected to the photo-diode 33′ and the other input connected to the ground, a comparator 36 to which a reference voltage is applied from a constant voltage circuit 39, and a Schmitt inverter circuit 37.

The counter means 5 is composed of an AND circuit 52, an oscillator 51 for inputting a reference pulse to the AND circuit 52, a counter IC 53 for receiving signals from the AND circuit, a flip-flop 54 connected to the counter IC 53 through a data bus F, and a pair of mono-stable multivibrator circuits 55, 56 for outputting one-shot pulses to the flip-flop 54 and the counter IC 53, respectively, based on signals from the photo-transistor means 3.

The photo-transistor 33 is in its ON state due to the laser beam passing through the optical fiber 2 and shows a low potential state at point $\underline{A}$ with respect to the AND circuit 52. However, once the laser beam is intercepted by the passing granule, the photo-transistor 33 turns OFF and the potential at point $\underline{A}$ becomes high thereby causing the AND circuit 52 to output a signal to the counter IC 53. The signal at point $\underline{C}$ is a pulse signal outputted by logical-AND between a pulse from the oscillator 51 and the signal at point $\underline{A}$. The counter IC 53 digitally converts the signal at point $\underline{C}$ of the AND circuit 52 and outputs the signal at point $\underline{F}$ to the flip-flop 54.

When the granule has passed through the laser beam, the photo-transistor 33 again turns to its ON state and, with points $\underline{A}$ to $\underline{L}$ being in their low state, the AND circuit 52 stops outputting signals. On the other hand, when point $\underline{A}$ turns to the low state, the mono-stable multivibrator 55 outputs a one-shot signal to each of the flip-flop 54 and the operation means 6 in response to a falling edge of the pulse at point A. This one-shot signal then causes the flip-flop 54 to output digital signals to the operation means 6. The mono-stable multi-vibrator 56 outputs a one-shot signal to the counter IC 53 and resets the counter IC 53 in response to a rising-edge of the pulse signal from the mono-stable multi-vibrator 55. The flip-flop 54 continues to output the same digital signal until the next one-shot signal is inputted thereto from the mono-stable multivibrator 55.

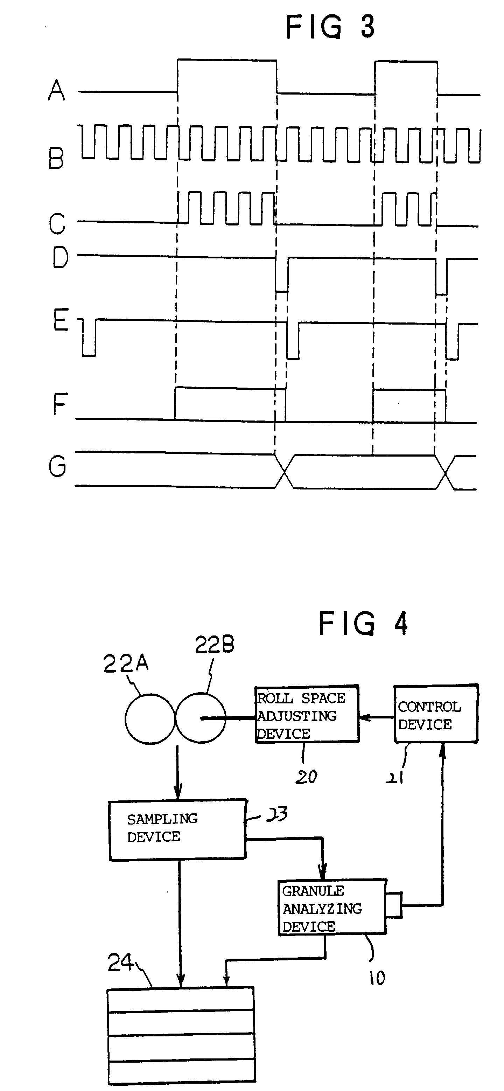

Fig. 3 shows a timing chart showing the various signals at points A - G in Fig. 2.

Referring back to Fig. 1, the outputs from the counter means 5 are inputted to the operation means 6 and stored at the memory means 7. The operation means 6 may be constituted by a logic circuit or may in practice be constituted by a CPU board which has an input port including the memory means 7 and in which it is possible to control the taking-in of and the operation of the data from the counter means 5 by, for example, programs written in a ROM.

Since it is not possible for the output of the counter circuit 5 to be infinitely taken-in and stored, the number of sample granules is limited so that, for example, the data on 2000 sample granules are inputted to the counter circuit 5. The operation means 6 calculates a granule distribution of the 2000 sample granules based on the data of the 2000 sample granules and also the predetermined coefficients stored in the memory means 7. In this operation, the 2000 sample granules are divided into small units based on any of the scales, namely, the time period or duration of the light being intercepted by a granule, the length of the granule derived from such time plus the moving speed of the granule, and the diameter of the granule derived from such length of the granule plus the predetermined coefficient. Thus, based on the length and the diameter of the granule, it is possible to make calculation for such as the granule distribution or, by accumulation, the percentage of the cumulative frequency of granules and the percentage of the cumulative weight of granules. As explained above, if the moving speed of a sample is available, it is possible to calculate the length of an individual sample granule on the basis of such moving speed and the period of time during which the laser beam is intercepted by the sample granule and, from such length of the granule and the coefficient obtained based on the correlation with the known granule distribution, it is possible to calculate the granule distribution (not known) of the 2000 sample granules. This coefficient may be in a plurality of coefficient ranges appropriately divided according to diameters of granules.

Depending on needs, the granule distribution obtained by the operation means 6 may be outputted through the data output port 8 to a display means or a printer means.

The sample moving speeds, especially the falling speeds vary due to differences in such as granule sizes and this variation causes error to occur when the length of a granule is calculated based both on the time period during which the laser beam is intercepted by the granule and the granule moving speed. However, when objects naturally fall starting from a zero speed, the speeds of falling objects immediately after the start of falling are the same. Thus, by arranging that the granule be caused to pass through between the laser beam and the photo-transistor means immediately after the granule being discharged from a sample supply means, that is, by arranging that the laser beam and the photo-transistor be provided immediately below the sample supply means, any influence from the granule moving speed to the calculation can be made negligible.

Next, with reference to Fig. 4, an explanation is made on a second embodiment wherein the granule analyzing apparatus 10 is connected through a control means 21 to a roll space adjusting means 20 of a pulverizer for use in pulverizing wheat granules.

As shown in Fig. 4, a sampling means 23 is disposed in a midway between a pair of grinding rolls 22A, 22B and a sifter 24. A part of crushed grains taken into the granule analyzing apparatus 10 is subjected to sampling process and the measured sample granules are forwarded to the sifter 24 through a bypassing passage. The granule analyzing apparatus 10 communicates with the roll space adjusting means 20 through the control means 21. The control means 21 receives signals from the granule analyzing apparatus 10, converts such signals and outputs the converted signals for causing the roll space adjusting means 20 to operate, whereby the space between the rolls 22B and the rolls 22A is adjusted by the roll space adjusting means 20.

Generally, the roll space adjusting is effected based on the granule residual ratio, that is, the ratio of the number of granules which remain on the sifter 24. The sifter 24 used is predetermined for each grinding step and, from the number of granules supplied thereto, the number of the residual granules whose diameters are larger than a given targeted granule diameter is obtained in percentage and this information is used for the roll space adjustment. The targeted granule diameter varies depending on grinding steps since the granules distribution changes as the grinding steps progress.

Where the granule analyzing apparatus 10 is used in the roll space adjusting means 20 for achieving the desired adjustment in the roll spacing, the operation means 6 of the granule analyzing apparatus 10, which stores in its memory means 7 the data on the targeted granule diameters and the targeted cumulative weight percentage or the targeted cumulative frequency percentage of granules with respect to the targeted diameters of granules, calculates the cumulative weight percentage or the cumulative frequency percentage of the granules with respect to the targeted diameters of the granules actually measured, compares the results thereof with the targeted cumulative weight percentage or the targeted cumulative frequency percentage of granules, and inputs the data on the difference therebetween to the control means 25 through the input means 8.

A further explanation in detail on the above is made with reference to Fig. 5. Shown vertically on the graph is the cumulative frequency percentage of granules and horizontally on the graph is the diameters of granules. From the data (intercepted time) obtained after the sample granules having passed through the granule analyzing apparatus 10, the granule distribution is obtained based on a predetermined coefficient. From this granule distribution, the cumulative frequency percentage of granules with respect to the diameters of granules has been plotted as shown in the graph.

In the graph, the targeted cumulative frequency percentage with respect to the targeted diameters $\underline{S}$ is set to $Y_A = 50\%$. The ideal curve under that state is represented by $\underline{A}$.

It is assumed here that the curve $\underline{B}$ is a plotted curve on the data obtained at the sampling means 23 through the measuring of the sample granules which passed through the granule analyzing apparatus 10. It is noted that the cumulative frequency percentage of granules with respect to the targeted diameters $\underline{S}$ is $Y_B = 55\%$. This means that there are a larger number of granules whose diameters are larger than the targeted diameters as compared with the granules represented by the curve $\underline{B}$. Consequently, the granule analyzing apparatus outputs the value -5%, that is,

$$Y_A - Y_B = -5\%.$$

On receiving this value -5%, the control means 21 sends out to the roll space adjusting means 20 a signal corresponding to the value -5%. In this example, since there are a larger number of granules whose diameters are larger than the targeted diameters $\underline{S}$, the roll space adjusting means 20 operates so as to cause the two rolls 22A, 22B to move in a direction to set a smaller space between them. In contrast thereto, in the case where the cumulative number as a percentage of granules with respect to the targeted diameters $\underline{S}$ is $Y_C = 45\%$ as shown by the curve $\underline{C}$, $Y_A - Y_C = +5\%$ this means that the sample granules contain a large number of granules whose diameters are smaller than the targeted diameter $\underline{S}$. In this case, the roll space adjusting means 20 operates so as to cause the two rolls 22A, 22B to move in a direction opposite to the above, that is, to set a wider space between the two rolls.

As explained above, according to the present invention, the apparatus for analyzing granules and method thereof reside in an arrangement which includes a means for measuring or counting the time during which the light is intercepted by a granule when it passes through between the coherent light and the coherent light receiving means. The portion at which the coherent light emitting means and the coherent light receiving means face each other and which thus forms a sensing means is disposed in the passage of the granules to be measured or may be disposed in a bypass of such passage. For the measurement, it is only necessary for the granules to pass through such portion or sensing means. As to means for taking-in the data from the counting means whenever necessary and in any amount necessary and for outputting data after having the inputted data arithmetically processed in any necessary form, such means can be realized by existing technology or by conventionally available means without the need of any special or extra means.

The present invention enables to provide a granule analyzing apparatus which is capable of carrying out continuous analysis of granules but such arrangements require the operation means and the counting means to meet the required processing speeds and analyzing capability.

According to the invention, for automating the system by which granules of variety of kinds may be crushed or ground, it is possible to provide an automated granule grinding degree analyzing apparatus which is simple in construction and is of low cost.

While the invention has been described in its preferred embodiments, it is to be understood that the words which have been used are words of description rather than 5 limitation and that changes within the purview of the appended claims may be made.

**Claims**

1. A roll space adjusting apparatus for a granule grinder, comprising:

a sampling means (23) for allowing granules which have been ground by a pair of grinding rolls (22A, 22B) of said granule grinder to fall naturally in air;
a granule analyzing means (10) for calculating a cumulative weight or frequency percentage with respect to a targeted diameter of said ground granules passing through said sampling means;
a control means (21) for comparing the cumulative weight or frequency percentage with respect to the targeted diameter, calculated by said granule analyzing means and a reference value externally inputted to said roll space adjusting apparatus and for outputting a control signal;

characterised in that the apparatus also comprises:

a roll space adjusting means (20) for controlling a space between said pair of grinding rolls of said granule grinder based on said control signal from said control means so as to cause said cumulative weight or frequency percentage and said reference value to coincide,
wherein said granule analyzing means comprises:
a coherent light emitting means (1) arranged on said sampling means, for emitting coherent light toward said ground granules;
a light receiving means (3) arranged on said sampling means and have a light received element (33, 33') which faces said light emitting means, for directly receiving said coherent light from said coherent light emitting means;
a counter means (5) connected to said light receiving means, for counting based on an output from said light receiving means an interception time period of each of said granules intercepting said coherent light between said coherent light emitting means and said light receiving means and frequencies of occurrence of such interception time periods of said granules passing at said sampling means;
a memory means (7) for storing therein said counted interception time period of each of said granules and said counted frequencies of occurrence of such time periods of said granules passing at said sampling means within a unit time, and a predetermined coefficient; and
an operation means (6) for calculating said cumulative weight or frequency percentage of the targeted diameter of said granules based on said counted interception time period, said counted frequencies of occurrence of such time periods and said predetermined coefficient stored in said memory means.

**2.** A roll space adjusting apparatus according to claim 1, in which said sampling means (23) is located immediately below said pair of grinding rolls (22A, 22B) of said granule grinder.

**3.** A roll space adjusting apparatus according to claim 1, in which said coherent light emitting means (1) is a Helium-Neon gas laser.

**4.** A roll space adjusting apparatus according to claim 1, in which said light receiving means (3) includes a photo-transistor (33) having an emitter electrode grounded and a collector electrode connected to a pull-up power source (31) through a protective resistor (32).

**5.** A roll space adjusting apparatus according to claim 1, in which said counter means (5) comprises:

an AND circuit (52) which receives at one input terminal an output signal from said light receiving means (3) and at the other input terminal pulse signals from a pulse signal generator (51), said AND circuit outputting the pulse signals from said pulse signal generator only during a time in which the output signal from said light receiving signal is at its high level;

a counter circuit (53) which converts the output signal from said AND circuit into a digital signal;

a flip-flop circuit (54) which holds the digital signal from said counter circuit for a predetermined time and outputs it to said operation means;

a first reset-pulse generating circuit (55) for generating a reset pulse for said flip-flop circuit in accordance with a down-edge of high level to low level of the signal from said light receiving means; and

a second reset-pulse generating circuit (56) for generating a reset pulse for said counter circuit on the basis of the reset pulse generated by said first reset-pulse generating circuit.

**6.** A roll space adjusting apparatus according to claim 5, in which said first and second reset-pulse generating circuits (55, 56) are mono-stable multivibrators.

**7.** A method of adjusting a roll space for a granule grinder, comprising:

providing a sampling means (23) for allowing granules which have been ground by a pair of grinding rolls (22A, 22B) of said granule grinder to fall naturally in air;

calculating a cumulative weight or frequency percentage with respect to a targeted diameter of said ground granules passing through said sampling means;

charaterised in that the method also comprises:

comparing the cumulative weight or frequency percentage with respect to the targeted diameter and a reference value externally inputted and outputting a control signal; and

controlling a space between said pair of grinding rolls of said granule grinder based on said control signal so as to cause said cumulative weight or frequency percentage and said reference value to coincide,

wherein said step of calculating a cumulative weight or frequency percentage comprises:

emitting coherent light toward said ground granules;

providing a light receiving means (3) having a light receiving element (33, 33') which faces said emitted coherent light, for directly receiving said coherent light;

counting based on an output from said light receiving means an interception time period of each of said granules intercepting said coherent light between the coherent light emitting means and said light receiving means and frequencies of occurrence of such interception time periods of said granules passing at said sampling means;

storing said counted interception time period of each of said granules and said counted frequencies of occurrence of such time periods of said granules passing at said sampling means within a unit time, and a predetermined coefficient; and

calculating said cumulative weight or frequency percentage of the targeted diameter of said granules based on said counted interception time period, said counted frequencies of occurrence of such time periods and said stored predetermined coefficient.

**Patentansprüche**

**1.** Walzenabstand-Einstellvorrichtung für einen Granulatschleifer, aufweisend:

eine Probennahmeeinrichtung (23), die es den Körnchen ermöglicht, welche durch ein Paar von Schleifwalzen (22A, 22B) des Granulatschleifers geschliffen wurden, natürlich in Luft zu fallen;

eine Granulat-Analysiereinrichtung (10) zum Berechnen eines kumulativen Gewichts oder eines Frequenzanteils bezüglich eines gewünschten Durchmessers der gemahlenen bzw. geschliffenen Körnchen, welche durch die Probennahmeeinrichtung treten;

eine Steuereinrichtung (21), zum Vergleichen des kumulativen Gewichtes oder des Frequenzanteils bezüglich des gewünschten Durchmessers, berechnet durch die Granulatanalysiereinrichtung mit einem Referenzwert, der extern in die Walzenabstand-Einstellvorrichtung eingegeben wird, und zum Ausgeben eines Steuersignals;

**dadurch gekennzeichnet,** daß die Vorrichtung ebenfalls aufweist:

eine Walzenabstand-Einstelleinrichtung (20) zum Steuern eines Abstands bzw. Raumes zwischen dem Paar von Schleifwalzen des Granulatschleifers bezogen auf das Steuersignal von der Steuereinrichtung, um zu veranlassen, daß das kumulative Gewicht oder der Frequenzanteil und der Referenzwert zusammenfallen, wobei die Granulatanalysiereinrichtung aufweist:

eine Kohärentlicht-Aussendeeinrichtung (1), die auf der Probennahmeeinrichtung angeordnet ist, um kohärentes Licht auf die geschliffenen Körnchen zu richten;

eine Lichtaufnahmeeinrichtung (3), die an der Probennahmeeinrichtung angeordnet ist und ein Lichtaufnahmeelement (33, 33') hat, welches der Lichtaussendeeinrichtung gegenüberliegt, um das kohärente Licht von der Kohärentlicht-Aussendeeinrichtung direkt zu empfangen;

eine Zähleinrichtung (5), die mit der Lichtaufnahmeeinrichtung verbunden ist, um auf der Basis eines Ausgangs von der Lichtaufnahmeeinrichtung eine Unterbrechungszeitdauer für jedes der Körnchen zu zählen, die das kohärente Licht zwischen der Kohärentlicht-Aussendeeinrichtung und der Lichtaufnahmeeinrichtung unterbricht bzw. abfängt sowie Eintrittsfrequenzen der Unterbrechungszeitdauer der Körnchen, die an der Probennahmeeinrichtung vorbeitreten;

eine Speichereinrichtung (7) zum Speichern der gezählten Unterbrechungszeitdauer von jedem der Körnchen und der gezählten Eintrittsfrequenzen solcher Zeitdauer der Körnchen, die an der Probennahmeeinrichtungen vorbeitreten in einer Einheitszeit, und eines vorbestimmten Koeffizienten; und

eine Betriebseinrichtung (6) zum Berechnen des kumulativen Gewichts oder Frequenzanteils des gewünschten Durchmessers der Körnchen bezogen auf die gezählte Unterbrechungszeitdauer, die gezählten Eintrittsfrequenzen solcher Zeitdauern und des vorbestimmten Koeffizienten, gespeichert in der Speichereinrichtung.

2. Walzenabstand-Einstellvorrichtung nach Anspruch 1, wobei die Probennahmeeinrichtung (23) unmittelbar unterhalb des Paars von Schleifwalzen (22A, 22B) des Granulatschleifers angeordnet ist.

3. Walzenabstand-Einstellvorrichtung nach Anspruch 1, wobei die Kohärentlicht-Aussendeeinrichtung (1) ein Helium-Neon-Gaslaser ist.

4. Walzenabstand-Einstellvorrichtung nach Anspruch 1, wobei die Lichtaufnahmeeinrichtung (3) einen Phototransistor (33) mit einer geerdeten Emitterelektrode und einer Kollektorelektrode aufweist, die mit einer Anzieh-Leistungsquelle (31) durch einen Schutzwiderstand (32) verbunden ist.

5. Walzenabstand-Einstellvorrichtung nach Anspruch 1, wobei die Zähleinrichtung (5) aufweist:

einen AND-Schaltkreis (52), der an einem Eingangsanschluß ein Ausgangssignal von der Lichtaufnahmeeinrichtung (3) und an dem anderen Eingangsanschluß Impulssignale von einem Impulssignal-Generator (51) empfängt, wobei der AND-Schaltkreis Impulssignale von dem Impulssignalgenerator nur während einer Zeit ausgibt, in der das Ausgangssignal von der Lichtaufnahmeeinrichtung auf seinem hohen Pegel ist;

einen Zähler-Schaltkreis (53), welcher das Ausgangssignal von dem AND-Schaltkreis in ein digitales Signal wandelt;

eine Flipflop-Schaltung (54), die das digitale Signal von dem Zählerschaltkreis für eine vorbestimmte Zeit hält und es an die Betriebseinrichtung ausgibt;

eine erste Rücksetzimpuls-Erzeugungsschaltung (55) zum Erzeugen eines Rücksetzimpulses für die Flipflop-Schaltung gemäß einer Unterkante von Hochpegel zu Niedrigpegel des Signals von der Lichtaufnahmeeinrichtung; und

eine zweite Rücksetzimpuls-Erzeugungsschaltung (56) zum Erzeugen eines Rücksetzimpulses für die Zählerschaltung auf der Basis des Rücksetzimpulses, erzeugt durch die erste Rücksetzimpuls-Erzeugungsschaltung.

6. Walzenabstand-Einstellvorrichtung gemäß Anspruch 5, wobei die erste und zweite Rücksetzimpuls-Erzeugungsschaltung (55, 56) monostabile Multivibratoren sind.

7. Verfahren zum Einstellen eines Walzenabstands für einen Granulatschleifer, aufweisend:

Vorsehen einer Probennahmeeinrichtung (23), um den Körnchen, die durch ein Paar von Schleifwalzen (22A, 22B) des Granulatschleifers gemahlen wurden, zu ermöglichen, natürlich in Luft zu fallen;

Berechnen eines kumulativen Gewichts oder eines Frequenzanteils bezüglich eines gewünschten Durchmessers der geschliffenen Körnchen, die durch die Probennahmeeinrichtung treten;

**dadurch gekennzeichnet,** daß das Verfahren auch aufweist:

Vergleichen des kumulativen Gewichts oder Frequenzanteils bezüglich des gewünschten Durchmessers mit einem Referenzwert, der extern eingegeben wird, und Ausgeben eines Steuersignals; und

Steuern eines Abstands bzw. Raumes zwischen dem Paar von Schleifwalzen des Granulatschleifers bezogen auf das Steuersignal, um zu veranlassen, daß das kumulative Gewicht oder der Frequenzanteil und der Referenzwert zusammenfallen, wobei der Schritt des Berechnens eines kumulativen Gewichtes oder Frequenzanteils aufweist:

Aussenden von kohärentem Licht auf die geschliffenen Körnchen;

Vorsehen einer Lichtaufnahmeeinrichtung (3) mit einem Lichtaufnahmeelement (33, 33'), welches dem ausgesendeten kohärenten Licht gegenüberliegt, um das kohärente Licht direkt zu empfangen;

Zählen auf der Basis eines Ausgangs von der Lichtaufnahmeeinrichtung, einer Unterbrechungszeitdauer jeder der Körnchen, welche das kohärente Licht unterbrechen zwischen der Kohärentlicht-Aussendeeinrichtung und der Lichtaufnahmeeinrichtung sowie der Eintrittsfrequenzen der Unterbrechungszeitdauern der Körnchen, die an der Probennahmeeinrichtung vorbeitreten;

Speichern der gezählten Unterbrechungszeitdauer für jedes der Körnchen und der gezählten Eintrittsfrequenzen solcher Zeitdauer der Körnchen, die an der Probennahmeeinrichtung vorbeitreten in einer Einheitszeit, und eines vorbestimmten Koeffizienten; und

Berechnen des kumulativen Gewichts oder Frequenzanteils des gewünschten Durchmessers der Körnchen, bezogen auf die gezählte Unterbrechungszeitdauer, die gezählten Eintrittsfrequenzen solcher Zeitdauern und des gespeicherten vorbestimmten Koeffizienten.

**Revendications**

1. Un appareil de réglage de l'espace entre rouleaux pour un broyeur à granules, comprenant :

un moyen d'échantillonnage (23) destiné à permettre à des granules qui ont été broyés par une paire de rouleaux de broyage (22A, 22B) dudit broyeur à granules, de tomber naturellement dans l'air;

un moyen d'analyse de granules (10) pour calculer un pourcentage cumulatif de poids ou de fréquence par rapport à un diamètre de consigne desdits granules broyés passant dans ledit moyen d'échantillonnage;

un moyen de commande (21) pour comparer le pourcentage cumulatif de poids ou de fréquence par rapport au diamètre de consigne, calculé par ledit moyen d'analyse de granules et une valeur de référence, introduite de façon externe dans ledit appareil de réglage de l'espace entre rouleaux, et pour émettre un signal de commande;

caractérisé en ce que l'appareil comprend également:

un moyen de réglage de l'espace entre rouleaux (20) pour contrôler un espace entre ladite paire de rouleaux de broyage dudit broyeur à granules sur la base dudit signal de commande venant dudit moyen de commande, de manière à faire coïncider ledit pourcentage cumulatif de poids ou de fréquence et ladite valeur de référence, et

dans lequel ledit moyen d'analyse de granules comprend:

un moyen émetteur de lumière cohérente (1) agencé sur ledit moyen d'échantillonnage, afin d'émettre une lumière cohérente vers lesdits granules broyés;

un moyen récepteur de lumière (3) agencé sur ledit moyen d'échantillonnage et ayant un élément récepteur de lumière (33, 33') tourné vers ledit moyen émetteur de lumière, afin de recevoir directement ladite lumière cohérente venant dudit moyen émetteur de lumière cohérente;

un moyen de comptage (5) relié audit moyen récepteur de lumière, afin de compter sur la base d'un signal de sortie venant dudit moyen récepteur de lumière, une période de temps d'interception de chacun desdits granules interceptant ladite lumière cohérente, entre ledit moyen émetteur de lumière cohérente et ledit moyen récepteur de lumière et les fréquences d'apparition de ces périodes de temps d'interception desdits granules passant dans ledit moyen d'échantillonnage;

un moyen de mémorisation (7) pour stocker ladite période de temps d'interception comptée de chacun desdits granules et lesdites fréquences comptées d'apparition de ces périodes de temps desdits granules passant dans ledit moyen d'échantillonnage dans un temps unitaire, et un coefficient prédéterminé; et

un moyen opérationnel (6) pour calculer ledit pourcentage cumulatif de poids ou de fréquence du diamètre de consigne desdits granules, sur la base de ladite période de temps d'interception comptée, desdites fréquences comptées d'apparition de ces périodes de temps et dudit coefficient prédéterminé stockés dans ledit moyen de mémorisation.

2. Un appareil de réglage de l'espace entre rouleaux selon la revendication 1, dans lequel ledit moyen d'échantillonnage (23) est placé immédiatement au-dessous de ladite paire de rouleaux de broyage (22A, 22B) dudit broyeur à granules.

3. Un appareil de réglage de l'espace entre rouleaux selon la revendication 1, dans lequel ledit moyen émetteur de lumière cohérente (1) est un laser à gaz hélium-néon.

4. Un appareil de réglage de l'espace entre rouleaux selon la revendication 1, dans lequel ledit moyen récepteur de lumière (3) comprend un phototransistor (33) ayant une électrode d'émetteur reliée à la masse et une électrode de collecteur reliée à une source de puissance à excursion haute (31) par l'intermédiaire d'une résistance de protection (32).

5. Un appareil de réglage de l'espace entre rouleaux selon la revendication 1, dans lequel ledit moyen de comptage (5) comprend:

un circuit logique ET (52) recevant à une borne d'entrée un signal de sortie venant dudit moyen récepteur de lumière (3) et à l'autre borne d'entrée des signaux d'impulsions venant d'un générateur de signal à impulsions (51), ledit circuit logique ET envoyant les signaux d'impulsions venant dudit générateur de signal d'impulsions, seulement pendant la durée pendant laquelle le signal de sortie venant dudit moyen récepteur de lumière est à son niveau haut;

un circuit comptage (53) assurant la conversion du signal de sortie venant dudit circuit logique ET en un signal numérique;

un circuit à bascule (54) maintenant le signal numérique venant dudit circuit de comptage pendant une durée prédéterminée, et l'envoyant audit moyen opérationnel;

un premier circuit de génération d'impulsions de remise à l'état initial (55) pour générer une impulsion de remise à l'état initial pour ledit circuit à bascule, selon un bord descendant du niveau haut vers le niveau bas du signal venant dudit moyen récepteur de lumière; et

un deuxième circuit de génération d'impulsions de remise à l'état initial (56) destiné à générer une impulsion de remise à l'état initial pour ledit circuit de comptage, sur la base d'une impulsion de remise à l'état initial générée par ledit premier circuit de génération d'impulsions de remise à l'état initial.

6. Un appareil de réglage de l'espace entre rouleaux selon la revendication 5, dans lequel lesdits premier et deuxième circuits de génération d'impulsions de remise à l'état initial (55, 56) sont des multivibrateurs monostables.

7. Un procédé de réglage de l'espace entre rouleaux pour un broyeur à granules, comprenant:

la prévision d'un moyen d'échantillonnage (23) destiné à permettre à des granules qui ont été broyés par une paire de rouleaux de broyage (22A, 22B) dudit broyeur à granules, de tomber naturellement dans l'air;

le calcul d'un pourcentage cumulatif de poids ou de fréquence par rapport à un diamètre de consigne desdits granules broyés passant dans ledit moyen d'échantillonnage;

caractérisé en ce que ledit procédé comprend également:

la comparaison du pourcentage cumulatif de poids ou de fréquence par rapport au diamètre de consigne et à une valeur de référence introduite de façon externe et une émission d'un signal de commande; et

le contrôle de l'espace entre ladite paire de rouleaux de broyage dudit broyeur à granules sur la base dudit signal de commande, de manière à faire coïncider ledit pourcentage cumulatif de poids ou de fréquence et ladite valeur de référence,

dans lequel ladite étape de calcul d'un pourcentage cumulatif de poids ou de fréquence comprend:

l'émission de lumière cohérente vers lesdits granules broyés;

la prévision d'un moyen récepteur de lumière (3) ayant un élément récepteur de lumière (33, 33') tourné vers ladite lumière cohérente émise, afin de recevoir directement ladite lumière cohérente;

le comptage sur la base d'une sortie venant dudit moyen récepteur de lumière d'une période de temps d'interception de chacun desdits granules interceptant ladite lumière cohérente entre ledit moyen émetteur de lumière cohérente et ledit moyen récepteur de lumière et des fréquences d'apparition de ces périodes de temps d'interception desdits granules passant sur ledit moyen d'échantillonnage;

le stockage de ladite période de temps d'interception comptée de chacun desdits granules et desdites fréquences comptées d'apparition de ces périodes de temps desdits granules passant dans ledit moyen d'échantillonnage dans un temps unitaire, et d'un coefficient prédéterminé; et

le calcul dudit pourcentage cumulatif de poids ou de fréquence du diamètre de consigne desdits granules sur la base de ladite période de temps d'interception comptée, desdites fréquences comptées d'apparition de ces périodes de temps et dudit coefficient prédéterminé stocké.

# FIG 1

# FIG 2

12

EP 0 487 356 B1

## FIG 3

## FIG 4

# FIG 5

# FIG 6